# EUROPEAN PATENT SPECIFICATION

(11) **EP 0 494 326 B1**
(45) Date of publication and mention of the grant of the patent: **01.05.1996**
(21) Application number: 91100245.9
(22) Date of filing: 09.01.1991
(51) Int. Cl.: C08L 95/00

(54) **Fiberized asphalt hot mix composition and method for improving durability and life of asphalt paved surfaces**
Fasern enthaltende heissgemischte Asphalt-Zusammensetzung und Verfahren zur Verbesserung der Haltbarkeit und Lebensdauer von Strassenbelägen
Composition asphaltique, mélangée à chaud contenant des fibres et méthode pour améliorer la durée de vie de revêtements asphaltiques

(43) Date of publication of application: 15.07.1992
(73) Proprietor: HERCULES INCORPORATED, Wilmington Delaware 19894-0001 (US)
(72) Inventor: Modrak, James Patrick, Conyers, Georgia 30208 (US)
(74) Representative: Lederer, Franz, Dr.

(56) References cited:
- US-A- 3 505 164
- US-A- 4 663 370

## Description

This invention relates to a method for making fiber-reinforced asphalt-type paving compositions for application to a substrate or in situ, the compositions, and their use.

Asphalt-type paving compositions, which for instance may contain asphalt, asphalt/rubber, rubber, or asphalt/acrylic copolymers, as well as various aggregates such as gravel, crushed stone, and sand, frequently contain synthetic polymeric staple fiber to improve flexibility and durability. For instance, U.S. Patent 4,492,781 describes a fiber-reinforced asphalt-type paving composition comprising an emulsifying agent, a water-soluble polymer, and 0.25% to 10% of reinforcing fibers, such as polyethylene or polypropylene staple fibers about 0.1 to 20 mm long, as well as conventional aggregate and thickening and curing agents, for application to surfaces as a hot mixture or as an emulsion.

U.S. Patent 4,663,370 discloses a polyolefin reinforced asphalt paving and sealing composition containing straight chain unsaturated fatty acid having up to 30 weight percent rosin as a plasticizer, plus an adhesion control component comprising high density polyolefin fines.

Either hot mix or emulsified asphalt-type compositions may be applied as a filler for underlying cracks in the surface as a waterproof layer between old and new paving surfaces, or as an external surfacing material. Those different functions involve differences in the amount and fineness of aggregate, the concentration and length of the reinforcing fibers, and the use of various conventional additives.

Synthetic staple fibers such as polypropylene and polyethylene fibers are desirable because they are compatible with asphalt and asphalt-type base compositions. However, the longer lengths and higher concentrations that facilitate interconnections between fibers and increased durability also adversely affect pumpability and tend to produce clumping of the fibers, as well as requiring higher temperature than the conventional 140°-155°C (284°F.-310°F) range for convenient hot application.

There is a need for fiber-reinforced asphalt-type paving compositions that facilitate strong interconnections between fibers to enhance durability, flexibility and shear resistance, without necessarilly increasing the staple length or the concentration of the fiber, and that are applicable within a wide range of temperature conditions.

According to the invention, a fiber-reinforced asphalt-type paving composition comprising a base component of an asphalt-type material adapted to be applied to a substrate before or concurrently with heating to a softened or molten form, and reinforcing fibers comprised of a polyolefin, as well as optional thickening and curing agents and aggregate, is characterized in that the reinforcing fibers are bicomponent fibers comprising a polyolefin-containing bonding component conjugated with a polyolefin-wettable reinforcing component, the bonding component having lower softening and melting points than the reinforcing component, the paving composition having an application consistency within a temperature range lying between the softening point of the bonding component and the melting point of the reinforcing component.

Also according to the invention, a method for making such fiber-reinforced asphalt-type paving compositions comprising heating a mixture of a base component of an asphalt-type material and reinforcing fibers comprised of a polyolefin, is characterized in that the reinforcing fibers are bicomponent fibers comprising a polyolefin-containing bonding component combined with a polyolefin-wettable reinforcing component, the bonding component having lower softening and melting points than the reinforcing component, and the mixture is heated to a temperature between the softening point of the bonding component and the melting point of the reinforcing component to provide a paving composition containing, after conventional application to a substrate, reinforcing fibers that are bonded to each other and effectively longer than the reinforcing fibers in the mixture before it is heated.

The fiber-reinforced asphalt-type paving composition can be used according to the invention in any conventional way, for instance, as a preheated molten paving mix that is evenly spread on the substrate, and after compaction and cooling contains reinforcing fibers that are bonded to each other. It may also be laid on the substrate in a cold or at least non-molten form and heated by the application of a hot roller or other hot compacting device to or above the softening point of the bonding component of the fibers, thus bonding them to the reinforcing fibers. Such bonding may be intermittant and localized, if preferred, by applying higher levels of temperature and pressure in an appropriate pattern through the use of a corrugated, nodulated, or otherwise patterned roller having hot protuberances at predetermined intervals that promote convergence and beading of the bonding component at the regions having a higher temperature.

Preferably, the components of the bicomponent fibers, namely, polyolefin-containing bonding component/polyolefin-wettable reinforcing component combinations, are polypropylene/polyester, polypropylene-maleic anhydride/polyester, polypropylene/polybutene, and polyethylene/polypropylene. More preferably, the bonding component is a copolymer of propylene and ethylene and the reinforcing component is a homopolymer of propylene, both components being substantially crystalline and the combination being well known in side-by-side or sheath-and-reinforcing core arrangements, for instance from U.S. Patent 3,505,164. Other bicomponent fibers are well known, for instance from U.S. Patent 4,732,809 (polyethylene or polypropylene/polyester).

Preferably the bicomponent reinforcing fibers are about 0.1 to 20 mm long and their diameter is in the range of 0.254 mm to 1.270 mm (1-5 mil). The preferred difference in melting or softening points between the components is in the range of 210°C to 50°C, the preferred range being limited if necessary to the range of temperatures within which the bonding component retains its ability to wet the reinforcing component. If polypropylene is present, it may have a viscosity average molecular weight of about 140,000 to 280,000 or even higher. A desired proportion of the reinforcing fibers may of course be single-component fibers, preferably polyolefin-wettable so that they may also be bonded to the reinforcing fibers in the bicomponent fibers.

Asphalt-type material adapted to be heated and spread in molten form on the surface to be paved have long been well known, for instance, from U.S. Patents 2,478,162, 3,738,853, and 4,492,781 and may be the conventional bituminous substances mentioned in those patents and often characterized by a penetration value of from 0-300 or higher, preferably about 40-300, with a softening point in the range of 32-121°C (90-250°F), preferably between 37.7-65.5°C (100-150°F). Such materials, which may comprise asphalt, asphalt/rubber, rubber, acrylic copolymer, or asphalt/acrylic copolymer, or mixtures of those ingredients, preferably contain conventional proportions, such as 0.5 to 10 weight percent, more preferably 0.5 to 1.5 weight percent, of a water-soluble polymer such as carboxymethyl cellulose, its sodium or calcium salt, carboxymethyl hydroxyethyl cellulose, or hydroxypropyl, hydroxyethyl cellulose, of the types well known, for instance, from the said U.S Patent 4,492,781. Examples of suitable base materials are cured latex materials combined with about 99-70 weight percent asphalt, and ethylene/acrylic acid copolymers in a range of 90-75 to 10-25 ratios by weight, and asphalt-to-latex copolymers of styrene and butyl acrylate that are sold by Rohm & Haas under the trademark EL 805, used alone or combined with hydrogenated rosin esters such as those sold by Hercules Incorporated under the trademark FORAL^{R}85.

Preferably, the amount of bicomponent reinforcing fibers employed varies, depending on the intended use of the paving composition, from a range of 0.10-12 weight percent (with 0.25-0.75 % preferred for use as a "slurry seal" and 3-12 % for use as a sealant for cracks), to an upper range of about 25% by weight.

For crack-sealant compositions, for instance, the paving composition preferably may contain 7.5 weight percent of fine aggregate such as sand, based on the weight of base material. This aggregate content can also serve as a supplemental thickening agent or be used to enhance the durability of the surface.

If the paving composition is utilized as a "slurry seal", on the other hand, a much higher aggregate concentration range (500-3000 weight percent of medium-to-heavy aggregate) is preferred, conventionally depending also on the method of application and temperature desired.

The present invention is further demonstrated by the following examples and Table:

### EXAMPLE I

Six hundred (600) grams of paving grade petroleum refiner grade asphalt is heated with continuous agitation in a blending kettle at 138°C (280°F) until melted and then slowly admixed with forty (40) grams of 1.27 cm (0.5 inch) polyethylene terephthalate/polypropylene core/sheath 10 dpf bicomponent staple obtained from Hercules Incorporated. The sheath melting point was about 152°C (305°F). The kettle temperature is then slowly raised, with constant agitation, to 165.5°C (330°F) and test tiles prepared by applying the mixed hot overlay composition onto a waxed release paper to a thickness of about 0.32cm (0.125"), using the same troweling techniques and passes for each sample, and then applying a weighted 1 kilogram stainless steel roller operating at room temperature (3 passes), to obtain a thickness of 0.071-0.079cm (0.028"-0.031"). The tile is then permitted to cool to room temperature. The resulting test tiles are then separated from their release papers and conventionally tested for tensile strength, using a Model 1122 Instron Universal 5 testing device marketed by Instron Corporation and using two separate test speeds. Test results are reported in Table I as T-1, and T-4 respectively.

### EXAMPLE II (Control)

Example I is repeated except that the kettle temperature is maintained throughout at 138°C (280°F), leaving the bicomponent fiber sheath component intact. The tile is then separated from its release papers and tested as in Example I, using two test speeds the results being reported in Table I as T-2, and T-5 respectively.

### EXAMPLE III (Control)

Example I is repeated, but using the same weight of a 4 dpf polypropylene monofilament 1.27cm (0.5") staple having a sheath melting point of 160°C (320°F). at a kettle temperature of 138°C (280°F).

The resulting tiles are tested as before and test results reported as T-3 and T-6 in Table I.

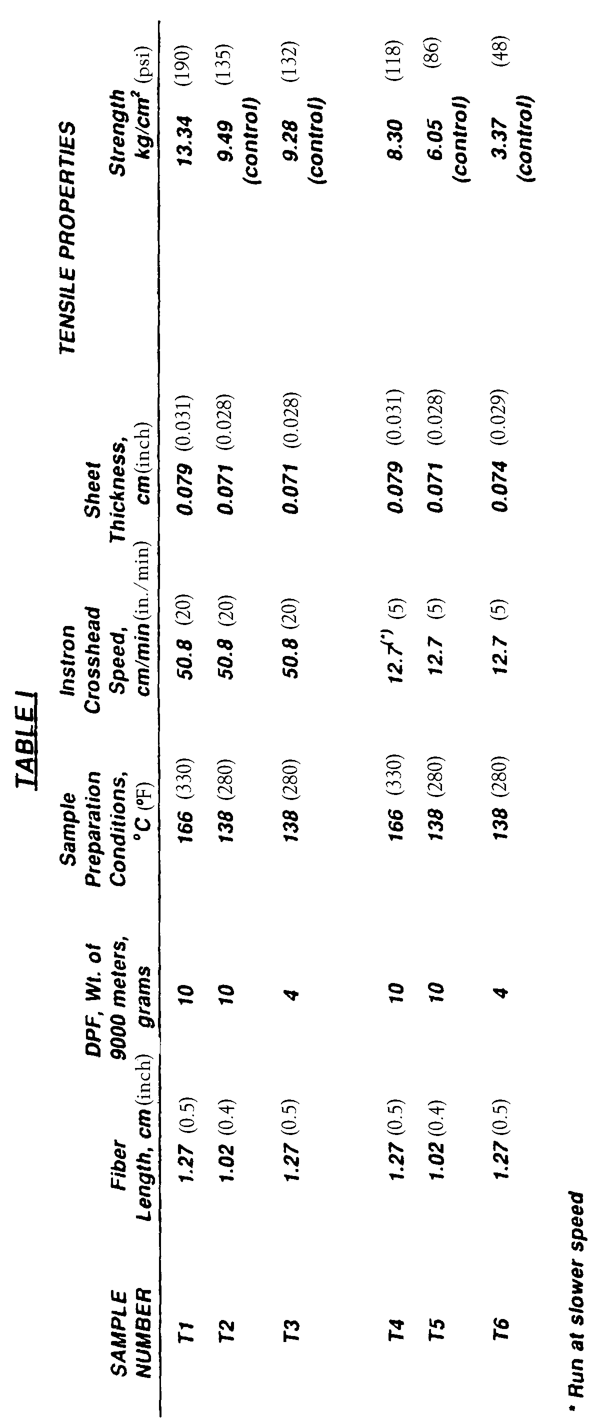

## Claims

1. A fiber-reinforced asphalt-type paving composition comprising a base component of an asphalt-type material adapted to be applied to a substrate before or concurrently with heating to a softened or molten form, and reinforcing fibers comprised of a polyolefin, as well as optional thickening and curing agents and aggregate, characterized in that the reinforcing fibers are bicomponent fibers comprising a polyolefin-containing bonding component conjugated with a polyolefin-wettable reinforcing component, the bonding component having lower softening and melting points than the reinforcing component, the paving composition having an application consistency within a temperature range lying between the softening point of the bonding component and the melting point of the reinforcing component.

2. A fiber-reinforced paving composition as claimed in claim 1, further characterized in that the bicomponent fibers comprise, as combinations of a polyolefin-containing bonding component with a polyolefin-wettable reinforcing component are polypropylene with polyester, polypropylene-maleic anhydride with polyester, polypropylene with polybutene, and polyethylene with polypropylene, the combination is in side-by-side or sheath-and-reinforcing core arrangements.

3. A fiber-reinforced paving composition as claimed in claim 2, further characterized in that bonding component is a copolymer of propylene and ethylene and the reinforcing component is a homopolymer of propylene, both components being substantially crystalline.

4. A fiber-reinforced paving composition as claimed in claim 1, 2, or 3, further characterized in that the bicomponent reinforcing fibers are 0.1 to 20 mm long and their diameter is in the range of 0.254 mm to 1.270 mm.

5. A fiber-reinforced paving composition as claimed in claim 1, 2, or 3, further characterized in that the difference in melting or softening points between the components of the bicomponent reinforcing fibers is in the range of 210°C to 50°C

6. A fiber-reinforced paving composition as claimed in claim 1, 2, or 3, further characterized in that the amount of the bicomponent reinforcing fibers employed is from 0.10 to 25 weight percent, based on the base component.

7. A fiber-reinforced paving composition as claimed in claim 6, further characterized in that the amount of the bicomponent reinforcing fibers employed is from 0.25 to 25%.

8. A method for making a fiber-reinforced asphalt-type paving composition as claimed in any one of the preceding claims, comprising heating a mixture of a base component of an asphalt-type material and reinforcing fibers comprised of a polyolefin, characterized in that the reinforcing fibers are bicomponent fibers comprising a polyolefin-containing bonding component linearly combined with a polyolefin-wettable reinforcing component, the bonding component having lower softening and melting points than the reinforcing component, and the mixture is heated to a temperature between the softening point of the bonding component and the melting point of the reinforcing component to provide a paving composition containing after conventional application to a surface reinforcing fibers that are bonded to each other and effectively longer than the reinforcing fibers in the mixture before it is heated.

9. Use of the fiber-reinforced paving composition as claimed in claims 1-7 in a paving mixture that is heated after being applied to a substrate by a hot compacting device to or above the softening point of the bonding component of the fibers.

10. Use of the fiber-reinforced paving composition as claimed in claim 9, in a paving mixture that is heated in a pattern of higher levels of temperature and pressure at predetermined intervals that promote convergence and beading of the bonding component at the regions having a higher temperature level.

11. Use of the fiber-reinforced paving composition as claimed in claims 1-7 for crack-sealant compositions that contain 3 to 12 % of the bicomponent reinforcing fibers and about 7.5 weight percent of sand based on the weight of the base material.

12. Use of the fiber-reinforced paving composition as claimed in any one of claims 1-7, 9 and 10, in sealing compositions that contain 0.25 to 0.75 % weight percent of the bicomponent reinforcing fibers, based on the weight of the base material.

## Claims (Claims for the following Contracting State(s): ES)

1. A method for making a fiber-reinforced asphalt-type paving composition,
comprising a base component of an asphalt-type material adapted to be applied to a substrate before or concurrently with heating to a softened or molten form, and reinforcing fibers comprised of a polyolefin, as well as optional thickening and curing agents and aggregate, wherein
the reinforcing fibers are bicomponent fibers comprising a polyolefin-containing bonding component conjugated with a polyolefin-wettable reinforcing component, the bonding component having lower softening and melting points than the reinforcing component, the paving composition having an application consistency within a temperature range lying between the softening point of the bonding component and the melting point of the reinforcing component ,
comprising heating a mixture of a base component of an asphalt-type material and reinforcing fibers comprised of a polyolefin, characterized in that the reinforcing fibers are bicomponent fibers comprising a polyolefin-containing bonding component linearly combined with a polyolefin-wettable reinforcing component, the bonding component having lower softening and melting points than the reinforcing component, and the mixture is heated to a temperature between the softening point of the bonding component and the melting point of the reinforcing component to provide a paving composition containing after conventional application to a surface reinforcing fibers that are bonded to each other and effectively longer than the reinforcing fibers in the mixture before it is heated.

2. A method for making a fiber-reinforced paving composition as claimed in claim 1, further characterized in that the bicomponent fibers comprise, as combinations of a polyolefin-containing bonding component with a polyolefin-wettable reinforcing component are polypropylene with polyester, polypropylene-maleic anhydride with polyester, polypropylene with polybutene, and polyethylene with polypropylene, the combination is in side-by-side or sheath-and-reinforcing core arrangements.

3. A method for making a fiber-reinforced paving composition as claimed in claim 2, further characterized in that bonding component is a copolymer of propylene and ethylene and the reinforcing component is a homopolymer of propylene, both components being substantially crystalline.

4. A method for making a fiber-reinforced paving composition as claimed in claim 1, 2, or 3, further characterized in that the bicomponent reinforcing fibers are 0.1 to 20 mm long and their diameter is in the range of 0.254 mm to 1.270 mm.

5. A method for making a fiber-reinforced paving composition as claimed in claim 1, 2, or 3, further characterized in that the difference in melting or softening points between the components of the bicomponent reinforcing fibers is in the range of 210°C to 50°C.

6. A method for making a fiber-reinforced paving composition as claimed in claim 1, 2, or 3, further characterized in that the amount of the bicomponent reinforcing fibers employed is from 0.10 to 25 weight percent, based on the base component.

7. A method for making a fiber-reinforced paving composition as claimed in claim 6, further characterized in that the amount of the bicomponent reinforcing fibers employed is from 0.25 to 25%.

8. A fiber-reinforced asphalt-type paving composition comprising a base component of an asphalt-type material adapted to be applied to a substrate before or concurrently with heating to a softened or molten form, and reinforcing fibers comprised of a polyolefin, as well as optional thickening and curing agents and aggregate, characterized in that the reinforcing fibers are bicomponent fibers comprising a polyolefin-containing bonding component conjugated with a polyolefin-wettable reinforcing component, the bonding component having lower softening and melting points than the reinforcing component, the paving composition having an application consistency within a temperature range lying between the softening point of the bonding component and the melting point of the reinforcing component.

9. Use of the fiber-reinforced paving composition as defined in claims 1-7 in a paving mixture that is heated after being applied to a substrate by a hot compacting device to or above the softening point of the bonding component of the fibers.

10. Use of the fiber-reinforced paving composition as claimed in claim 9, in a paving mixture that is heated in a pattern of higher levels of temperature and pressure at predetermined intervals that promote convergence and beading of the bonding component at the regions having a higher temperature level.

11. Use of the fiber-reinforced paving composition obtainable by a method according to any one of claims 1 to 7 or as defined in claim 8 for crack-sealant compositions that contain 3 to 12% of the bicomponent reinforcing fibers and about 7.5 weight percent of sand based on the weight of the base material.

12. Use of the fiber-reinforced paving composition obtainable by a method according to any one of claims 1 to 7 or as defined in claim 8 or as claimed in claims 9 or 10 in sealing compositions that contain 0.25 to 0.75% weight percent of the bicomponent reinforcing fibers, based on the weight of the base material.

## Patentansprüche (Patentansprüche für folgende(n) Vertragsstaat(en): AT, BE, CH, DK, FR, GB, IT, LI, NL, SE)

1. Faserverstärkte, asphaltartige Bodenbelagszusammensetzung, die eine Grundkomponente eines asphaltartigen, zum Aufbringen auf ein Substrat vor oder während der Erwärmung bis zu erweichter oder geschmolzener Form angepaßten Materials und ein Polyolefin umfassende Verstärkungsfasern sowie wahlweise Verdickungs- und Härtungsmittel und ein Aggregat umfaßt, dadurch gekennzeichnet, daß die Verstärkungsfasern Zweikomponentenfasern sind, die eine Polyolefin-enthaltende Bindungskomponente umfassen, die mit einer Polyolefinbenetzbaren Verstärkungskomponente konjugiert ist, wobei die Bindungskomponente niedrigere Erweichungs- und Schmelzpunkte hat als die Verstärkungskomponente und die Bodenbelagszusammensetzung eine Aufbringkonsistenz innerhalb eines Temperaturbereichs hat, der zwischen dem Erweichungspunkt der Bindungskomponente und dem Schmelzpunkt der Verstärkungskomponente liegt.

2. Faserverstärkte Bodenbelagszusammensetzung gemäß Anspruch 1, weiterhin dadurch gekennzeichnet, daß die Zweikomponentenfasern als Kombinationen einer Polyolefinenthaltenden Bindungskomponente mit einer Polyolefinbenetzbaren Verstärkungskomponente Polypropylen mit Polyester, Polypropylen-Maleinanhydrid mit Polyester, Polypropylen mit Polybuten und Polyethylen mit Polypropylen umfassen und die Kombination Seite an Seite oder als Fasermantel und Verstärkungskern angeordnet ist.

3. Faserverstärkte Bodenbelagszusammensetzung gemäß Anspruch 2, weiterhin dadurch gekennzeichnet, daß die Bindungskomponente ein Copolymer von Propylen und Ethylen ist und die Verstärkungskomponente ein Homopolymer von Propylen ist, wobei beide Komponenten im wesentlichen kristallin sind.

4. Faserverstärkte Bodenbelagszusammensetzung gemäß Anspruch 1, 2 oder 3, weiterhin dadurch gekennzeichnet, daß die Zweikomponentenverstärkungsfasern 0,1 bis 20 mm lang sind und ihr Durchmesser im Bereich von 0,254 mm bis 1,270 mm liegt.

5. Faserverstärkte Bodenbelagszusammensetzung gemäß Anspruch 1, 2 oder 3, weiterhin dadurch gekennzeichnet, daß die Differenz der Schmelz- oder Erweichungspunkte zwischen den Komponenten der Zweikomponentenverstärkungsfasern im Bereich von 210°C bis 50°C liegt.

6. Faserverstärkte Bodenbelagszusammensetzung gemäß Anspruch 1, 2 oder 3, weiterhin dadurch gekennzeichnet, daß die Menge der eingesetzten Zweikomponentenverstärkungsfasern 0,10 bis 25 Gew.-%, basierend auf der Grundkomponente, beträgt.

7. Faserverstärkte Bodenbelagszusammensetzung gemäß Anspruch 6, weiterhin dadurch gekennzeichnet, daß die Menge der eingesetzten Zweikomponentenverstärkungsfasern 0,25 bis 25% beträgt.

8. Verfahren zur Herstellung einer faserverstärkten, asphaltartigen Bodenbelagszusammensetzung gemäß einem der vorhergehenden Ansprüche, das die Erwärmung einer Mischung einer Grundkomponente eines asphaltartigen Materials und ein Polyolefin umfassende Verstärkungsfasern umfaßt, dadurch gekennzeichnet, daß die Verstärkungsfasern Zweikomponentenfasern sind, die eine Polyolefin-enthaltende Bindungskomponente umfassen, die linear mit einer Polyolefinbenetzbaren Verstärkungskomponente kombiniert ist, wobei die Bindungskomponente niedrigere Erweichungs- und Schmelzpunkte hat als die Verstärkungskomponente, und die Mischung auf eine Temperatur zwischen dem Erweichungspunkt der Bindungskomponente und dem Schmelzpunkt der Verstärkungskomponente erwärmt wird, um eine Bodenbelagszusammensetzung zur Verfügung zu stellen, die nach herkömmlichem Aufbringen auf eine Oberfläche Verstärkungsfasern enthält, die miteinander verbunden sind und effektiv länger sind als die Verstärkungsfasern in der Mischung, bevor diese erwärmt wird.

9. Verwendung der faserverstärkten Bodenbelagszusammensetzung gemäß Ansprüchen 1-7 in einer Bodenbelagsmischung, die, nachdem sie auf ein Substrat aufgebracht wurde, mittels eines Heißverdichtungsgerätes auf oder über den Erweichungspunkt der Bindungskomponente der Fasern erwärmt wird.

10. Verwendung der faserverstärkten Bodenbelagszusammensetzung gemäß Anspruch 9 in einer Bodenbelagsmischung, die in einem Muster höherer Temperatur- und Druckniveaus in vorbestimmten Abständen erwärmt wird, die die Konvergenz und Perlbildung der Bindungskomponente in den Regionen mit einem höheren Temperaturniveau fördern.

11. Verwendung der faserverstärkten Bodenbelagszusammensetzung gemäß Ansprüchen 1-7 für Rißdichtungsmaterialzusammensetzungen, die 3 bis 12% der Zweikomponentenverstärkungsfasern und etwa 7,5 Gew.-% Sand, basierend auf dem Gewicht des Grundmaterials, enthalten.

12. Verwendung der faserverstärkten Bodenbelagszusammensetzung gemäß einem der Ansprüche 1-7, 9 und 10 in Dichtungszusammensetzungen, die 0,25 bis 0,75 Gew.-% der Zweikomponentenverstärkungsfasern, basierend auf dem Gewicht des Grundmaterials, enthalten.

## Patentansprüche (Patentansprüche für folgende(n) Vertragsstaat(en): ES)

1. Verfahren zur Herstellung einer faserverstärkten, asphaltartigen Bodenbelagszusammensetzung, die eine Grundkomponente eines asphaltartigen, zum Aufbringen auf ein Substrat vor oder während der Erwärmung bis zu erweichter oder geschmolzener Form angepaßten Materials und ein Polyolefin umfassende Verstärkungsfasern sowie wahlweise Verdickungs- und Härtungsmittel und ein Aggregat umfaßt, worin die Verstärkungsfasern Zweikomponentenfasern sind, die eine Polyolefin-enthaltende Bindungskomponente umfassen, die mit einer Polyolefin-benetzbaren Verstärkungskomponente konjugiert ist, wobei die Bindungskomponente niedrigere Erweichungs- und Schmelzpunkte hat als die Verstärkungskomponente und die Bodenbelagszusammensetzung eine Aufbringkonsistenz innerhalb eines Temperaturbereiches hat, der zwischen dem Erweichungspunkt der Bindungskomponente und dem Schmelzpunkt der Verstärkungskomponente liegt, umfassend die Erwärmung einer Mischung einer Grundkomponente eines asphaltartigen Materials und ein Polyolefin umfassende Verstärkungsfasern, dadurch gekennzeichnet, daß die Verstärkungsfasern Zweikomponentenfasern sind, die eine Polyolefin-enthaltende Bindungskomponente umfassen, die linear mit einer Polyolefin-benetzbaren Verstärkungskomponente kombiniert ist, wobei die Bindungskomponente niedrigere Erweichungs- und Schmelzpunkte hat als die Verstärkungskomponente, und die Mischung auf eine Temperatur zwischen dem Erweichungspunkt der Bindungskomponente und dem Schmelzpunkt der Verstärkungskomponente erwärmt wird, um eine Bodenbelagszusammensetzung zur Verfügung zu stellen, die nach herkömmlichem Aufbringen auf eine Oberfläche Verstärkungsfasern enthält, die miteinander verbunden sind und effektiv länger sind als die Verstärkungsfasern in der Mischung, bevor diese erwärmt wird.

2. Verfahren zur Herstellung einer faserverstärkten Bodenbelagszusammensetzung gemäß Anspruch 1, weiterhin dadurch gekennzeichnet, daß die Zweikomponentenfasern als Kombinationen einer Polyolefin-enthaltenden Bindungskomponente mit einer Polyolefin-benetzbaren Verstärkungskomponente Polypropylen mit Polyester, Polypropylen-Maleinanhydrid mit Polyester, Polypropylen mit Polybuten und Polyethylen mit Polypropylen umfassen und die Kombination Seite an Seite oder als Fasermantel und Verstärkungskern angeordnet ist.

3. Verfahren zur Herstellung einer faserverstärkten Bodenbelagszusammensetzung gemäß Anspruch 2, weiterhin dadurch gekennzeichnet, daß die Bindungskomponente ein Copolymer von Propylen und Ethylen ist und die Verstärkungskomponente ein Homopolymer von Propylen ist, wobei beide Komponenten im wesentlichen kristallin sind.

4. Verfahren zur Herstellung einer faserverstärkten Bodenbelagszusammensetzung gemäß Anspruch 1, 2 oder 3, weiterhin dadurch gekennzeichnet, daß die Zweikomponentenverstärkungsfasern 0,1 bis 20 mm lang sind und ihr Durchmesser im Bereich von 0,254 mm bis 1,270 mm liegt.

5. Verfahren zur Herstellung einer faserverstärkten Bodenbelagszusammensetzung gemäß Anspruch 1, 2 oder 3, weiterhin dadurch gekennzeichnet, daß die Differenz der Schmelz- oder Erweichungspunkte zwischen den Komponenten der Zweikomponentenverstärkungsfasern im Bereich von 210°C bis 50°C liegt.

6. Verfahren zur Herstellung einer faserverstärkten Bodenbelagszusammensetzung gemäß Anspruch 1, 2 oder 3, weiterhin dadurch gekennzeichnet, daß die Menge der eingesetzten Zweikomponentenverstärkungsfasern 0,10 bis 25 Gew.-%, basierend auf der Grundkomponente, beträgt.

7. Verfahren zur Herstellung einer faserverstärkten Bodenbelagszusammensetzung gemäß Anspruch 6, weiterhin dadurch gekennzeichnet, daß die Menge der eingesetzten Zweikomponentenverstärkungsfasern 0,25 bis 25% beträgt.

8. Faserverstärkte, asphaltartige Bodenbelagszusammensetzung, die eine Grundkomponente eines asphaltartigen, zum Aufbringen auf ein Substrat vor oder während der Erwärmung bis zu erweichter oder geschmolzener Form angepaßten Materials und ein Polyolefin umfassende Verstärkungsfasern sowie wahlweise Verdickungs- und Härtungsmittel und ein Aggregat umfaßt, dadurch gekennzeichnet, daß die Verstärkungsfasern Zweikomponentenfasern sind, die eine Polyolefin-enthaltende Bindungskomponente umfassen, die mit einer Polyolefin-benetzbaren Verstärkungskomponente konjugiert ist, wobei die Bindungskomponente niedrigere Erweichungs- und Schmelzpunkte hat als die Verstärkungskomponente und die Bodenbelagszusammensetzung eine Aufbringkonsistenz innerhalb eines Temperaturbereichs hat, der zwischen dem Erweichungspunkt der Bindungskomponente und dem Schmelzpunkt der Verstärkungskomponente liegt.

9. Verwendung der faserverstärkten Bodenbelagszusammensetzung wie in den Ansprüchen 1-7 definiert in einer Bodenbelagsmischung, die, nachdem sie auf ein Substrat aufgebracht wurde, mittels eines Heißverdichtungsgerätes auf oder über den Erweichungspunkt der Bindungskomponente der Fasern erwärmt wird.

10. Verwendung der faserverstärkten Bodenbelagszusammensetzung gemäß Anspruch 9 in einer Bodenbelagsmischung, die in einem Muster höherer Temperatur- und Druckniveaus in vorbestimmten Abständen erwärmt wird, die die Konvergenz und Perlbildung der Bindungskomponente in den Regionen mit einem höheren Temperaturniveau fördern.

11. Verwendung der faserverstärkten Bodenbelagszusammensetzung, erhältlich durch ein Verfahren gemäß einem der Ansprüche 1 bis 7 oder wie in Anspruch 8 definiert für Rißdichtungsmaterialzusammensetzungen, die 3 bis 12% der Zweikomponentenverstärkungsfasern und etwa 7,5 Gew.-% Sand, basierend auf dem Gewicht des Grundmaterials, enthalten.

12. Verwendung der faserverstärkten Bodenbelagszusammensetzung, erhältlich durch ein Verfahren gemäß einem der Ansprüche 1 bis 7 oder wie in Anspruch 8 definiert oder gemäß Ansprüchen 9 oder 10 in Dichtungszusammensetzungen, die 0,25 bis 0,75 Gew.-% der Zweikomponentenverstärkungsfasern, basierend auf dem Gewicht des Grundmaterials, enthalten.

## Revendications (Revendications pour l'(les) Etat(s) contractant(s) suivant(s): AT, BE, CH, DK, FR, GB, IT, LI, NL, SE)

1. Composition de pavement du type asphalte, renforcée de fibres, qui comprend un composant de base d'un matériau du type asphalte, convenant à l'application sur un support avant ou concurremment avec le chauffage, pour donner une forme ramollie ou fondue et des fibres de renforcement constituées d'une polyoléfine, ainsi que d'éventuels agents épaississants et durcissants et du granulat, caractérisée en ce que les fibres de renforcement sont des fibres à deux composants, comprenant un composant de liaison contenant une polyoléfine, conjugué à un composant de renforcement mouillable par une polyoléfine, le composant liant ou de liaison possédant des points de ramollissement et de fusion inférieurs à ceux du composant de renforcement, la composition de pavement possédant une consistance d'application dans une plage de températures qui se situe entre le point de ramollissement du composant liant ou de liaison et le point de fusion du composant de renforcement.

2. Composition de pavement renforcée des fibres suivant la revendication 1, caractérisée en ce que les fibres à deux composants comprennent, comme combinaisons d'un composant liant ou de liaison contenant une polyoléfine et d'un composant de renforcement mouillable par la polyoléfine, du polypropylène et du polyester, du polypropylène-anhydride maléique et du polyester, du polypropylène et du polybutène et du polyéthylène et du polypropylène, la combinaison se présentant en agencement côte à côte ou gaine et noyau de renforcement.

3. Composition de pavement renforcée de fibres suivant la revendication 2, caractérisée en ce que le composant liant ou de liaison est un copolymère du propylène et de l'éthylène et le composant de renforcement est un homopolymère du propylène, les deux composants étant sensiblement cristallins.

4. Composition de pavement renforcée de fibres suivant la revendication 1, 2 ou 3, caractérisée en ce que les fibres de renforcement à deux composants ont une longueur de 0,1 à 20 mm et en ce que leur diamètre varie dans la plage de 0,254 mm à 1,270 mm.

5. Composition de pavement renforcée de fibres suivant la revendication 1, 2 ou 3, caractérisée en ce que la différence en points de fusion ou de ramollissement entre les composants des fibres de renforcement à deux composants varie dans la plage de 210°C à 50°C.

6. Composition de pavement renforcée de fibres suivant la revendication 1, 2 ou 3, caractérisée en ce que la quantité de fibres de renforcement à deux composants utilisée varie de 0,10 à 25% en poids, sur base du composant de base.

7. Composition de pavement renforcée de fibres suivant la revendication 6, caractérisée en ce que la quantité des fibres de renforcement à deux composants varie de 0,25 à 25%.

8. Procédé de fabrication de compositions de pavement du type asphalte, renforcées de fibres, comprenant le chauffage d'un mélange d'un composant de base d'un matériau du type asphalte et de fibres de renforcement constituées d'une polyoléfine, caractérisé en ce que les fibres de renforcement sont des fibres à deux composants comprenant un composant liant ou de liaison contenant une polyoléfine combiné à un composant de renforcement mouillable par la polyoléfine, le composant liant ou de liaison possédant des points de ramollissement et de fusion inférieurs à ceux du composant de renforcement, on chauffe le mélange jusqu'à une température comprise entre le point de ramollissement du composant liant ou de liaison et le point de fusion du composant de renforcement, de manière à obtenir une composition de pavement contenant, après application classique sur un support, que les fibres de renforcement soient liées les unes aux autres et soient effectivement plus longues que les fibres de renforcement dans le mélange avant la chauffe de celui-ci.

9. Utilisation de la composition de pavement renforcée de fibres suivant l'une quelconque des revendications 1 à 7 dans un mélange de pavement qui est chauffé après avoir été appliqué sur un support par un dispositif de compactage à chaud jusqu'au ou au delà du point de ramollissement du composant liant ou de liaison des fibres.

10. Utilisation de la composition de pavement renforcée de fibres suivant la revendication 9 dans un mélange de pavement qui est chauffé selon un modèle de niveaux élevés de température et de pression à des intervalles prédéterminés qui favorisent la convergence et le perlage du composant liant ou de liaison en des régions qui possèdent un niveau de température supérieur.

11. Utilisation de la composition de pavement renforcée de fibres suivant l'une quelconque des revendications 1 à 7 pour des compositions d'étanchement ou de calfeutrage de fissures, qui contient 3 à 12% des fibres de renforcement à deux composants et environ 7,5% en poids de sable sur base du poids du matériau de base.

12. Utilisation de la composition de pavement renforcée de fibres suivant l'une quelconque des revendications 1-7, 9 et 10, dans des compositions d'étanchement ou de calfeutrage qui contiennent 0,25 à 0,75% en poids des fibres de renforcement à deux composants, sur base du poids du matériau de base.

## Revendications (Revendications pour l'(les) Etat(s) contractant(s) suivant(s): ES)

1. Procédé de fabrication d'une composition de pavement du type asphalte, renforcée de fibres, comprenant un composant de base d'un matériau du type asphalte, convenant à l'application sur un support avant ou concurremment avec le chauffage, pour donner une forme ramollie ou fondue et des fibres de renforcement constituées d'une polyoléfine, ainsi que d'éventuels agents épaississants et durcissants et du granulat, caractérisé en ce que
les fibres de renforcement sont des fibres à deux composants, comprenant un composant de liaison contenant une polyoléfine, conjugué à un composant de renforcement mouillable par une polyoléfine, le composant liant ou de liaison possédant des points de ramollissement et de fusion inférieurs à ceux du composant de renforcement, la composition de pavement possédant une consistance d'application dans une plage de températures qui se situe entre le point de ramollissement du composant liant ou de liaison et le point de fusion du composant de renforcement,
comprenant le chauffage d'un mélange d'un composant de base d'un matériau du type asphalte et de fibres de renforcement constituées d'une polyoléfine, caractérisé en ce que les fibres de renforcement sont des fibres à deux composants comprenant un composant liant ou de liaison contenant une polyoléfine combiné à un composant de renforcement mouillable par la polyoléfine, le composant liant ou de liaison possédant des points de ramollissement et de fusion inférieurs à ceux du composant de renforcement, on chauffe le mélange jusqu'à une température comprise entre le point de ramollissement du composant liant ou de liaison et le point de fusion du composant de renforcement, de manière à obtenir une composition de pavement contenant, après application classique sur un support, que les fibres de renforcement soient liées les unes aux autres et soient effectivement plus longues que les fibres de renforcement dans le mélange avant la chauffe de celui-ci.

2. Procédé de fabrication d'une composition de pavement renforcée des fibres suivant la revendication 1, caractérisé en ce que les fibres à deux composants comprennent, comme combinaisons d'un composant liant ou de liaison contenant une polyoléfine et d'un composant de renforcement mouillable par la polyoléfine, du polypropylène et du polyester, du polypropylène-anhydride maléique et du polyester, du polypropylène et du polybutène et du polyéthylène et du polypropylène, la combinaison se présentant en agencement côte à côte ou gaine et noyau de renforcement.

3. Procédé de fabrication d'une composition de pavement renforcée de fibres suivant la revendication 2, caractérisé en ce que le composant liant ou de liaison est un copolymère du propylène et de l'éthylène et le composant de renforcement est un homopolymère du propylène, les deux composants étant sensiblement cristallins.

4. Procédé de fabrication d'une composition de pavement renforcée de fibres suivant la revendication 1, 2 ou 3, caractérisé en ce que les fibres de renforcement à deux composants ont une longueur de 0,1 à 20 mm et en ce que leur diamètre varie dans la plage de 0,254 mm à 1,270 mm.

5. Procédé de fabrication d'une composition de pavement renforcée de fibres suivant la revendication 1, 2 ou 3, caractérisé en ce que la différence en points de fusion ou de ramollissement entre les composants des fibres de renforcement à deux composants varie dans la plage de 210°C à 50°C.

6. Procédé de fabrication d'une composition de pavement renforcée de fibres suivant la revendication 1, 2 ou 3, caractérisé en ce que la quantité de fibres de renforcement à deux composants utilisée varie de 0,10 à 25% en poids, sur base du composant de base.

7. Procédé de fabrication d'une composition de pavement renforcée de fibres suivant la revendication 6, caractérisé en ce que la quantité des fibres de renforcement à deux composants varie de 0,25 à 25%.

8. Composition de pavement du type asphalte, renforcée de fibres, qui comprend un composant de base d'un matériau du type asphalte, convenant à l'application sur un support avant ou concurremment avec le chauffage, pour donner une forme ramollie ou fondue et des fibres de renforcement constituées d'une polyoléfine, ainsi que d'éventuels agents épaississants et durcissants et du granulat, caractérisée en ce que les fibres de renforcement sont des fibres à deux composants, comprenant un composant liant ou de liaison contenant une polyoléfine, conjugué à un composant de renforcement mouillable par une polyoléfine, le composant liant ou de liaison possédant des points de ramollissement et de fusion inférieurs à ceux du composant de renforcement, la composition de pavement possédant une consistance d'application dans une plage de températures qui se situe entre le point de ramollissement du composant liant ou de liaison et le point de fusion du composant de renforcement.

9. Utilisation de la composition de pavement renforcée de fibres telle que définie dans les revendications 1 à 7 dans un mélange de pavement qui est chauffé après avoir été appliqué sur un support par un dispositif de compactage à chaud jusqu'au ou au delà du point de ramollissement du composant liant ou de liaison des fibres.

10. Utilisation de la composition de pavement renforcée de fibres suivant la revendication 9 dans un mélange de pavement qui est chauffé selon un modèle de niveaux élevés de température et de pression à des intervalles prédéterminés qui favorisent la convergence et le perlage du composant liant ou de liaison en des régions qui possèdent un niveau de température supérieur.

11. Utilisation de la composition de pavement renforcée de fibres que l'on peut obtenir par un procédé suivant l'une quelconque des revendications 1 à 7 ou telle que définie dans la revendication 8 pour des compositions d'étanchement ou de calfeutrage de fissures, qui contient 3 à 12% des fibres de renforcement à deux composants et environ 7,5% en poids de sable sur base du poids du matériau de base.

12. Utilisation de la composition de pavement renforcée de fibres suivant l'une quelconque des revendications 1-7, ou telle que définie dans la revendication 8 ou suivant l'une quelconque des revendications 9 et 10, dans des compositions d'étanchement ou de calfeutrage qui contiennent 0,25 à 0,75% en poids des fibres de renforcement à deux composants, sur base du poids du matériau de base.
